# EUROPEAN PATENT APPLICATION

(11) **EP 1 659 441 A1**
(43) Date of publication of application: **24.05.2006**
(21) Application number: 05257105.6
(22) Date of filing: 17.11.2005
(51) Int. Cl.: G02F 1/1335

(54) **View angle controlling sheet and liquid crystal display apparatus using the same**

(30) Priority: 18.11.2004 JP 2004333919; 16.09.2005 JP 2005270966
(71) Applicant: Dainippon Printing Co., Ltd., Tokyo 162-8001 (JP)
(72) Inventor: Amemiya, Hiroyuki, c/o Dai Nippon Printing Co. Ltd, Shinjuku-ku Tokyo-to 162-8001 (JP); Watanabe, Osamu, c/o Dai Nippon Printing Co., Ltd., Shinjuku-ku Tokyo-to 162-8001 (JP); Ichikawa, Nobuhiko, c/o Dai Nippon Printing Co Ltd, Shinjuku-ku Tokyo-to 162-8001 (JP)
(74) Representative: Hatt, Anna Louise

(57) **Abstract**

The present invention is to provide a view angle controlling sheet to be disposed between the light source and the display panel of a liquid crystal display apparatus, effective for limiting the light beam output angle. A view angle controlling sheet (S1) to be disposed between the light source (54) and the liquid crystal panel (52) of a liquid crystal display apparatus (50), wherein the view angle controlling sheet (S1) has lens parts (12,12,···) having a trapezoidal cross sectional shape arranged by a predetermined interval and the wedge parts (14,14,···) between the adjacent lens parts (12,12,···) is filled with a light absorbing material such that the wedge part (14) has the top end (18) disposed to the observer side and the bottom surface (17) to the light source side and with the premise that the angle formed by the slant face portion of the wedge part (14) and the normal of the light output plane is θ, θ is in a range of 3° ≤ θ ≤ 15°.

## Description

### BACKGROUND OF THE INVENTION

### Field of the Invention

The present invention relates to a view angle controlling sheet to be disposed between the light source and the liquid crystal panel of a liquid crystal display apparatus, having the function of preferably controlling the performance of the liquid crystal display apparatus, in particular, the light beam from the light source of the liquid crystal display, and a liquid crystal display apparatus using the same.

### Description of the Related Art

According to a liquid crystal display apparatus, in general, a wide view angle is preferred so that a preferable image can be obtained wherever the observer is.

On the other hand, in the case of working in a commuter train or according to a liquid crystal display installed at a public place such as an ATM, it is inconvenient to have the screen peeped from the other people. In this case, a peep preventive function for ensuring the sight of only the observer of the liquid crystal display while blocking the other' s sight so as to protect the privacy is called for. Moreover, according to a vehicle mounting type liquid crystal display apparatus such as a car navigation system, there is the phenomenon of blocking the sight by the reflection of the liquid crystal display apparatus screen onto the window glass at night, or the like so that the reflection preventive function is called for and the control of the light beam output angle is desired. To such a demand, a louver type view angle controlling sheet as shown in for example FIG. 11 has been developed and put into use (see for example Japanese Patent Application Publication (JP-B) No. 58-47681, Japanese Patent Application National Publication (Laid-Open) No. 6-504627, and JP-B No. 7-27081). As a representative production method for the louver type view angle controlling sheet, as mentioned in JP-B Nos. 58-47681 and 7-27081, a production method of alternately laminating a resin colored for absorbing the light beam and a transparent resin so as to form a colored layer and a transparent layer alternately, and finally cutting by a certain thickness perpendicular to the lamination direction has been executed. A louver type view angle controlling sheet is used while being disposed for example between the light source and the liquid crystal panel of a liquid crystal display apparatus (see Patent No. 2679642).

However, according to the conventional louver type view angle controlling sheet, since it has a configuration of merely forming the colored layer and the transparent layer alternately with a rectangular louver cross sectional shape so as to merely absorbing the light beam from the oblique direction by the colored layer without obtaining the converging effect of converging the light beam from the light source to a targeted output angle with a large light amount loss and a low light beam utilization efficiency so that a problem arises in that only the limited view angle control is enabled.

Furthermore, according to the production method mentioned in the patent article, the transparent portion and the colored portion shouldbe laminated until a desired thickness is obtained, and thus it has the shortcomings of a poor productivity and a high production cost. Moreover, an extremely sophisticated and troublesome work of planning the obtained block to an even thickness after laminating the transparent portion and the colored portion so that a large number of steps and a bulky apparatus are required, and thus a problem is involved in that a gigantic cost is needed.

### SUMMARY OF THE INVENTION

Accordingly, an object of the present invention is to provide an inexpensive view angle controlling sheet to be disposed between the light source and the display panel of a liquid crystal display apparatus, effective for limiting the light beam output angle for as the peel prevention, the reflection prevention, or the like while providing a high light beam transmittance to the observer side.

A view angle controlling sheet of the present invention has light transmissible resins with a trapezoidal shape by a predetermined interval on the surface of a light transmissible base material so as to provide a lens part, and filling a wedge shaped gap between the adjacent trapezoids (hereinafter it is referred to as a "wedge part") with a light absorbing material so as to form a light absorbing part.

A first aspect of the present invention is a view angle controlling sheet to be disposed between the light source and the liquid crystal panel of a liquid crystal display apparatus, wherein the view angle controlling sheet has lens parts having a trapezoidal cross sectional shape arranged by a predetermined interval and the wedge parts between the adjacent lens parts is filled with a light absorbing material such that the wedge part has the top end disposed to the observer side and the bottom surface to the light source side and with the premise that the angle formed by the slant face portion of the wedge part and the normal of the light output plane is θ, θ is in a range of 3° ≤ θ ≤ 15°.

According to the present invention, since the wedge part formed between the lens parts of the trapezoidal shape made of a light transmissible resin is filled with a light absorbing material, a view angle controlling sheet having the view angle controlling effect and a high light beam transmittance to the observer side can be obtained. According to the present invention, the wedge part has a cross sectional shape of a substantially isosceles triangle or a substantially isosceles trapezoid, or a trapezoid having a pair of opposite sides not parallel with each other with the angles formed with the upper bottom or the lower bottom different with each other (hereinafter, it is described as the "trapezoid unsymmetrical in the right and left direction"), or a triangle having angles formed with the right and left sides and the bottom side different with each other and the vertex and the bottom angle formed as an acute angle (hereinafter, it is described as the "acute triangle unsymmetrical in the right and left direction"). Since the wedge part has the cross sectional shape, a shaping die can be used in the production, a highly accurate sheet can be produced efficiently and continuously, and furthermore, the specification change can be dealt with immediately so that an inexpensive view angle controlling sheet can be obtained.

According to the present invention, in the case the angle θ formed by the slant face portion of the wedge part and the normal of the light output plane is less than 3°, the diffused light beam from the light source cannot reach sufficiently to the observer from side so that the luminance improving effect cannot be obtained, and furthermore, the production of the view angle controlling sheet becomes difficult. On the other hand, in the case θ is more than 15°, due to too small the area of the lens part for having the diffused light beam from the light source transmitted, the luminance is lowered so that the effect of the view angle controlling sheet becomes insufficient. In order to maintain the front side luminance using the view angle controlling sheet of the present invention, the preferable range of θ is 3° or more and 15° or less.

A second aspect of the present invention is the view angle controlling sheet of the first aspect, wherein the cross sectional shape of the wedge part is substantially isosceles trapezoidal or substantially isosceles triangular with the wider lower bottom surface provided to the light source side.

According to the present invention, since the wedge part is substantially isosceles trapezoidal, the vertex of the upper bottom surface of the wedge part becomes an obtuse angle so that the die, or the like for producing the wedge part can be produced more easily compared with the case of the substantially isosceles triangular cross sectional shape, and furthermore, the strength of the wedge part is improved so that a high quality view angle controlling sheet (including a film) can be produced stably, and thus it is preferable.

A third aspect of the present invention is the view angle controlling sheet according to the first aspect, wherein the cross sectional shape of the wedge part is trapezoidal unsymmetrical in the right and left direction or an acute triangular unsymmetrical in the right and left direction with the wider lower bottom provided to the light source side.

According to the present invention, since the cross sectional shape of the wedge part is trapezoidal unsymmetrical in the right and left direction or an acute triangular unsymmetrical in the right and left direction, the light output angle with the peak light beam transmittance can be shifted so as to effectively realize the reflection preventing function, and thus it is preferable.

A fourth aspect of the present invention is the view angle controlling sheet according to any one of the first to third aspects, wherein with the premise that the refractive index of the mainmaterial comprising the wedge part is N2 and the refractive index of the material comprising the lens part is N1, the relationship of N2 < N1 is satisfied.

According to the present invention, since the refractive index difference of the light transmissible resin as the material comprising the lens part and the main material comprising the wedge part is provided larger by N2 < N1, the total reflection in the slant face portion of the wedge part can be carried out efficiently so that the luminance deterioration in the front side can be restrained.

A fifth aspect of the present invention is the view angle controlling sheet according to any one of the first to fourth aspects, wherein the slant face portion of the wedge part has a curved and/or bent cross sectional shape such that the angle formed with the observer side surface differs in the light source side and the observer side.

A sixth aspect of the present invention is the view angle controlling sheet according to any one of the first to fifth aspects, wherein the light absorbing material to fill the wedge part is black particles.

A seventh aspect of the present invention is the view angle controlling sheet according to the sixth aspect, wherein with the premise that the lower bottom surface width of the wedge part is L µm and the average particle size of the black particles is φ µm, the relationship of 1 µm ≤ φ ≤ (L/2) µm is satisfied.

An eighth aspect of the present invention is the view angle controlling sheet according to any one of the first to seventh aspects, wherein at least one additive function of AR, AS and AG is provided to at least on one surface side.

A ninth aspect of the present invention is a liquid crystal display apparatus comprising the view angle controlling sheet according to any one of the first to eighth aspects, a light source to be disposed on one side of the view angle controlling sheet, and a liquid crystal panel to be disposed on the other side of the view angle controlling sheet so as to solve the problems.

A tenth aspect of the present invention is the liquid crystal display apparatus according to the ninth aspect, wherein the view angle controlling sheet is bonded to the liquid crystal panel side.

According to the view angle controlling sheet of the present invention, since the lens parts having a trapezoidal cross sectional shape made of a light transmissible resin are arranged by a predetermined interval, the cross sectional shape of the adjacent lens parts is wedge like with the lower bottom surface wider to the light source side as substantially isosceles trapezoidal, substantially isosceles triangular, trapezoidal unsymmetrical in the right and left direction or acute triangular unsymmetrical in the right and left direction, and the wedge part is filled with a material having the light absorbing property, a view angle controlling sheet having the view angle controlling effect can be obtained. Moreover, since the view angle controlling sheet of the present invention is provided between the light source and the liquid crystal panel of a liquid crystal display apparatus, the light incident angle to the liquid crystal panel can be controlled so that the unnecessary reflection of the screen of the vehicle mounting type liquid crystal display apparatus to the window glass, or the like can be prevented. Furthermore, since the refractive index difference of the light transmissible resin and the main material comprising the wedge part is large, the light beam diffused from the light source can be utilized effectively so as to improve the utilization efficiency of the light beam for improving the front side luminance.

Furthermore, according to the view angle controlling sheet of the present invention, since a shaping die can be used at the time of the production, a highly accurate sheet with the wedge part strength improved can be produced efficiently and continuously, and furthermore, an inexpensive view angle controlling sheet capable of immediately dealing with the specification change can be obtained.

### BRIEF DESCRIPTION OF THE DRAWINGS

FIG. 1 is a diagram showing a cross section in one direction of a view angle controlling sheet of a first embodiment of the present invention;
FIG. 2 is a diagram showing a cross section in one direction of a view angle controlling sheet of a second embodiment of the present invention;
FIG. 3 is a diagram showing various aspects of the substantially isosceles trapezoidal shape of the wedge part of the present invention;
FIG. 4 is a diagram showing a cross section in one direction of a view angle controlling sheet of a third embodiment of the present invention;
FIG. 5 is a diagram showing an aspect of the angle formed by the slant face of the wedge part and the normal of the light output plane according to the third embodiment of the present invention;
FIG. 6 is a diagram showing a cross section in one direction of a view angle controlling sheet of a fourth embodiment of the present invention;
FIG. 7 is a diagram showing a cross section in one direction of a view angle controlling sheet of a fifth embodiment of the present invention;
FIG. 8 is a diagram showing an example of the configuration of a view angle controlling sheet of the present invention;
FIG. 9 is a diagram showing an example of the configuration of a display apparatus comprising a view angle controlling sheet of the present invention;
FIG. 10 is a graph showing the relationship between the transmittance and the light output angle of a view angle controlling sheet; and

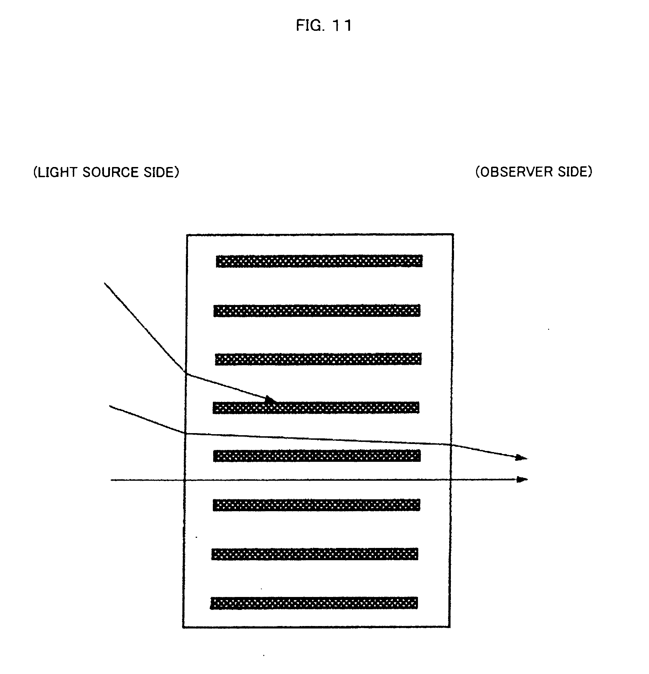

FIG. 11 is a diagram showing an example of the conventional view angle controlling sheet.

### DETAILED DESCRIPTION OF THE INVENTION

Hereinafter, the embodiments of the present invention will be explained with reference to the drawings. In order to facilitate understanding of the present invention, the reference numerals of the accompanied drawings are applied, however, the present invention is not limited to the embodiments shown in the drawings.

### (First embodiment)

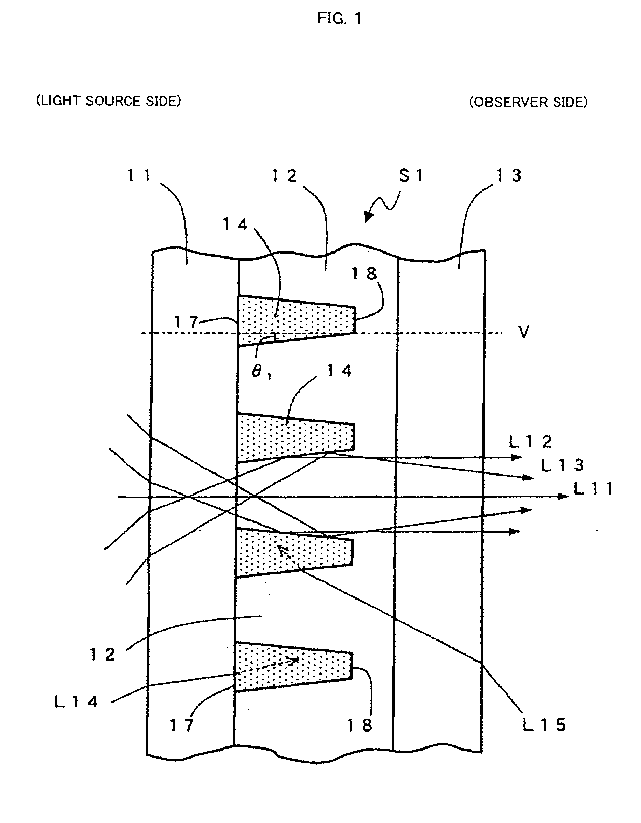

FIG. 1 is a diagram showing a cross section in one direction of a representative example of a view angle controlling sheet S1 of a first embodiment of the present invention. In FIG. 1, the light source is disposed on the left side in the figure for outputting a diffusing light beam and the observer is situated on the right side of the figure. The view angle controlling sheet S1 comprises a light beam side base sheet 11, a lens part 12, and an observer side base sheet 13 attached from the light source side to the observer side successively. The lens part 12 is made of a substance having a refractive index of N1. Furthermore, the cross section wedge parts provided between the oblique sides of the lens parts 12, 12 adjacent in the vertical direction in the figure are substantially isosceles trapezoidal with the lower bottom surface 17 wider to the light source side and they are filled with a low refractive index substance having a refractive index of N2, which is lower than the refractive index N1 of the lens parts 12. The wedge parts 14 have an upper bottom surface 18 with the width narrower to the observer side and a lower bottom surface 17 to the light source side.

In the present invention, the base sheets 11, 13 to be attached to the view angle controlling sheet S1 may be provided on either of the light source side and the observer side, or only the view angle controlling sheet S1 may be provided without using a base sheet. As to the method for forming the lens part, the conventionally known methods such as the thermal press method of pressing a heated die to a thermoplastic resin, the casting method of injecting a thermoplastic resin composition into a mold and solidifying the same, an injection molding method, and a UV method of injecting a ultraviolet ray hardening type resin composition into a shaping mold and hardening the same with a ultraviolet ray, can be used. Among these methods, the UV method with the excellent mass productivity is more preferable. According to the UV method, using a roll like mold, an arranged lens unit can be produced continuously.

The refractive index N1 of the lens part 12 and the refractive index N2 of the low refractive index substance for filling the wedge part 14 are set in a predetermined range N2 < N1 for obtaining the optical characteristics of the view angle controlling sheet S1. Moreover, the angle formed by the slant face with the wedge part 14 and the lens part 12 contacted and the normal V of the light output plane (the line parallel to the perpendicular incident light beam to the view angle controlling sheet S1) is formed in a predetermined angle θ1.

The wedge part 14 is filled with a resin as the main material mixed with a pigment such as a carbon or a predetermined dye so as to be colored to a predetermined concentration. Moreover, the light source side base sheet 11 and the observer side base sheet 13 are made of a material having the substantially same refractive index as that of the lens part 12. At least one additive function of AR, AS and AG may be provided to at least on one surface side of the view angle controlling sheet S1. Here, "AR" is the abbreviation of the anti reflection, which denotes the function of restraining the reflectance of the light beam incident on the lens surface. Moreover, "AS" is the abbreviation of the anti static, which denotes the function of preventing charging that prevents charging in the production process. Moreover, "AG" is the abbreviation for the anti glare, which denotes the function of preventing glaring of the lens surface that prevents generation of the Newton ring.

Next, the optical path of a light beam inputted into the lens part 12 of the view angle controlling sheet S1 will be explained briefly with reference to FIG. 1. In FIG. 1, the optical paths of the light beams L11 to L15 are shown schematically. A perpendicular light beam L11 incident in the vicinity of the central part of the lens part 12 from the light source side passes straightly in the inside of the view angle controlling sheet S1 as it is so as to reach to the observer. A light beam L12 incident in the vicinity of the end part of the lens part 12 with a predetermined angle from the light source side is totally reflected by the slant face according to the refractive index difference between the lens part 12 having the refractive index N1 and the wedge part 14 having the refractive index N2 so as to be outputted to the observer side as a perpendicular light beam. A light beam L13 incident in the vicinity of the end part of the lens part 12 with a large angle from the light source side is totally reflected by the slant face so as to be outputted to the observer side with a small angle in the direction opposite to the direction at the time of input as a light beam having an angle close to a perpendicular light beam. A light beam L14 directly incident from the bottom surface 17 to the wedge part 14 is inputted to the inside of the wedge part 14. Since the wedge part 14 is colored, the light beam L14 is absorbed by the wedge part 14 so as not to reach to the observer side. Furthermore, a light beam L15 incident on the slant face with an angle smaller than a predetermined value from the observer side and directing to the light source side is not totally reflected by the refractive index difference between the lens part 12 and the wedge part 14 so as to be inputted to the inside of the wedge part 14 so that the light beam L15 is absorbed by the colored wedge part 14. Accordingly, a view angle controlling sheet capable of controlling the view angle in the cross sectional direction as well as restraining the luminance deterioration can be obtained.

### (Second embodiment)

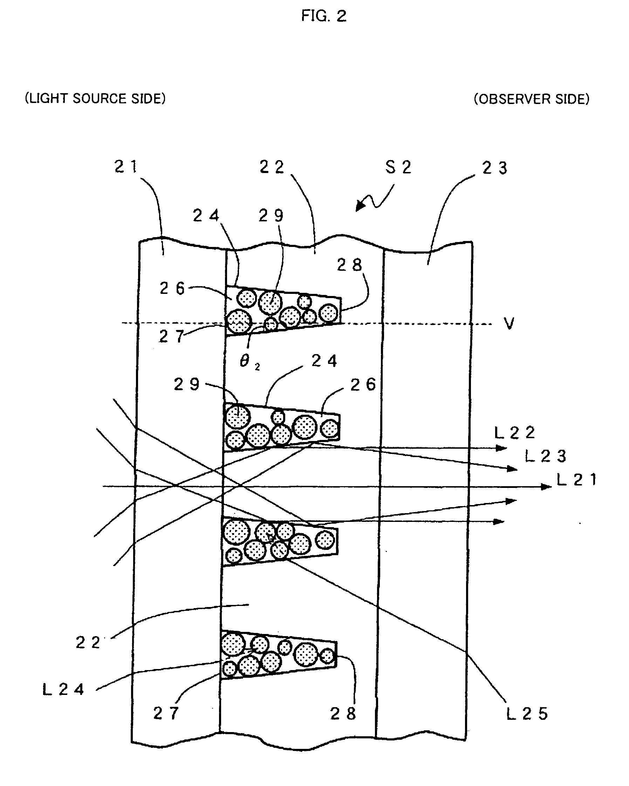

FIG. 2 shows a cross section of a view angle controlling sheet S2 of a second embodiment of the present invention. The view angle controlling sheet S2 comprises a light beam side base sheet 21, a lens part 22, and an observer side base sheet 23 attached from the light source side to the observer side successively. The lens part 22 is made of a substance having a high refractive index N1. Furthermore, the cross section trapezoidal portions provided between the lens parts 22, 22 adjacent in the vertical direction in the figure are filled with a material with a light absorbing particle 29 added in a transparent substance as the main material having a refractive index of N2, which is lower than N1 (hereinafter it will be referred to as the "Transparent low refractive index substance 26"). The trapezoidal cross section wedge parts 24 have a lower bottom surface 27 to the observer side and an upper bottom surface 28 to the light source side. In the present invention, the base sheets 21, 23 to be attached to the view angle controlling sheet S2 may be provided on either of the light source side and the observer side, or only the view angle controlling sheet S2 may be provided without using a base sheet.

The refractive index N1 of the lens part 22 and the refractive index N2 of the low refractive index substance 26 are set in a predetermined range N2 < N1 for obtaining the optical characteristics of the view angle controlling sheet S2. Moreover, the angle formed by the slant face with the wedge part 24 and the lens part 22 contacted and the normal V of the light output plane (the line parallel to the perpendicular incident light beam to the view angle controlling sheet S2) is formed in a predetermined angle θ2.

As to the method for forming the lens part, the conventionally known methods such as the thermal press method of pressing a heated die to a thermoplastic resin, the casting method of injecting a thermoplastic resin composition into a mold and solidifying the same, an injection molding method, and a UV method of injecting a ultraviolet ray hardening type resin composition into a shaping mold and hardening the same with a ultraviolet ray, can be used. Among these methods, the UV method with the excellent mass productivity is more preferable. According to the UV method, using a roll like mold, an arranged lens unit can be produced continuously.

For example, the lens part 22 in general is made of an ionizing radiation hardening material such as an epoxy acrylate. In the case of carrying out a method for producing a lens part using an ionizing radiation hardening material, a method of forming a lens part on a base sheet 23 is used.

At the time, as the transparent low refractive index substance 26 to be the main material comprising the wedge part 24, it is preferable to use an ionizing radiation hardening material such as a urethane acrylate. As the light absorbing particle 29 comprising the wedge part 24, a commercially available colored particle can be used. For example, it is used as an ink in a state dispersed in the transparent low refractive index substance 26 as the binder.

That is, the wedge part 24 is filled with an ink comprising a colored particle having a light absorbing function, an ionizing radiation hardening type resin to be the main material having the function of a transparent low refractive index substance and of a binder, and a photo initiator for smoothly carrying out the ionizing radiation hardening operation. In order to improve the production easiness, as needed, a small amount of an additive such as a defoaming agent and a leveling agent may optionally be added to the ink.

As the colored particle, a black pigment such as a carbon black, a resin particle such as a transparent particle of an acrylic, or the like dyed with the black pigment such as a carbon black, or the like can be used. Moreover, a mixture of various pigments of blue, purple, yellow and red other than the black pigment and/or a dye, or a substantially black material prepared by mixing and dispersing the black coloring material to a blue, purple, yellow and red coloring material can be used as well. As the blue pigment, a copper phthalocyanine, or the like, as the purple pigment, a dioxadine violet, or the like, as the yellow pigment, a disazo yellow, or the like, and as the red pigment, a chromo phthalic red typel, or the like can be used, but it is not limited thereto, and instead of a pigment, a dye can be used as well. Moreover, a colored particle prepared by coloring a resin particle of a transparent particle such as an acrylic with a coloring pigment or a dye with a blue, purple, yellow, red, black pigment or dye mixed and dispersed can be used as well.

Among the colored particles, in the present invention, a black particle having the highest light absorbing property is the preferable material.

The light absorbing particle 29 in the view angle controlling sheet S2 in the second embodiment preferably has a 1 µm or more average particle size and half of the width of the upper bottom surface 28 of the wedge part 24 or less. In the case the size of the light absorbing particle 29 is less than 1 µm and too small, a sufficient light absorbing effect cannot be obtained. On the other hand, in the case the size of the light absorbing particle 29 is more than half or the width of the upper bottom surface 28 of the wedge part 24 and too large, the inside of the wedge part 24 can hardly be filled with the ink at the time of the production so as to deteriorate the filling ratio as well as irregularity is generated in the filling ratio depending on the unit wedge part so as to generate the optical irregularity, and thus it is not preferable.

Moreover, the light absorbing particle 29 in the view angle controlling sheet S2 in the second embodiment is provided preferably by 10 to 50% by volume with respect to the total volume of the wedge part 24. By maintaining the ratio, the easy production conditions can be provided while maintaining a sufficient light absorbing effect.

As the binder, for example, a transparent resin having a predetermined refractive index and the ionizing radiation hardening function, such as a ultraviolet ray hardening type resin, an electron beam hardening type resin, or the like can be used. Although some have the hardening reaction directly by the ionizing radiation, it is general to generate the hardening reaction via a catalyst or a substance for exciting the reaction called an initiating agent. In order to generate the hardening function with an ultraviolet ray having a 300 to 400 nmwavelength, it is general to mix a substance for exciting the reaction in an ultraviolet ray range called a photo initiator by several %. As the photo initiator, there are a ketone based one and an acetophenone based one, and Sandley 1000, Darocure 1163, Darocure 1173, Irgacure 183, Irgacure 651, or the like are known. According to the kind (wavelength characteristics) of the ionizing radiation for hardening, it can be selected optionally. As the ionizing radiation hardening type resin, a reactive oligomer (an epoxy acrylate based one, a urethane acrylate based one, a polyether acrylate based one, a polyester acrylate based one, a polythiol based one, or the like), a reactive monomer (a vinyl pyrrolidone, a 2-ethyl hexyl acrylate, a β-hydroxy acrylate, a tetrahydro fulfuryl acrylate, or the like) can be selected optionally. For the flowability adjustment for the ionizing radiation hardeningtypelightabsorbing materialbefore hardening, the kind of the reactive oligomer and the composition ratio of a low molecular weight reactive monomer having a low viscosity can be changed optionally.

The material having the light absorbing property in this embodiment can be used as an ink by homogeneously dispersing (mixing) one optionally selected from the materials by a three roll dispersing method, or the like. The composition ratio can be determined optionally according to the evaluation of the hardening property by the ionizing radiation, and the various physical properties after hardening, and the coloring agent is 10 to 50 parts, the binder is 50 to 90 parts and the photo initiator is preferably about 1 to 10 parts.

After filling the wedge part 24 by a wiping method, or the like, the ink including at least the transparent low refractive index substance 26 and the light absorbing particle 29 is hardened by the ionizing radiation such as the ultraviolet ray so as to be fixed to the wedge part. Moreover, the light source side base sheet 21 and the observer side base sheet 23 are made of a material having the substantially same refractive index as that of the lens part 22.

In this embodiment, as in the case of the view angle controlling sheet S1 in the first embodiment, at least one additive function of AR, AS and AG may be provided to at least on one surface side of the view angle controlling sheet S2 so as to provide the function property to the view angle controlling sheet S2.

Next, the optical path of a light beam inputted into the lens part 22 of the view angle controlling sheet S2 will be explainedbrieflywith reference to FIG. 2. In FIG. 2, the optical paths of the light beams L21 to L23 and L24 are shown schematically. In FIG. 2, a perpendicular light beam L21 incident in the vicinity of the central part of the lens part 22 from the light source side passes straightly in the inside of the view angle controlling sheet S2 as it is so as to reach to the observer. A light beam L22 incident obliquely in the vicinity of the end part of the lens part 22 from the light source side is totally reflected by the slant face according to the refractive index difference between the lens part 22 and the transparent low refractive index substance 26 so as to be outputted to the observer side as a perpendicular light beam. A light beam L23 incident in the vicinity of the end part of the lens part 22 with a still larger angle from the light source side is totally reflected by the slant face so as to be outputted to the observer side with an angle smaller than that at the time of input in the direction opposite to the direction at the time of input as a light beam having an angle close to a perpendicular light beam. A light beam L24 incident from the bottom surface 27 of the wedge part 24 is inputted to the inside of the wedge part 24 so as to be absorbed by the light absorbing particle 29 without reaching to the observer side. Furthermore, a light beam L25 incident on the slant face with an angle smaller than a predetermined value from the observer side and directing to the light source side is not totally reflected by the refractive index difference between the lens part 22 and the wedge part 24 so as to be inputted to the inside of the wedge part 24. The beam L25 is absorbed by the light absorbing particle 29 of the wedge part 24. Accordingly, since the light beams incident from the light source side with various angles can be outputted in the light output surface normal direction or in a direction close thereto, a view angle controlling sheet capable of restraining the luminance deterioration while controlling the view angle can be obtained.

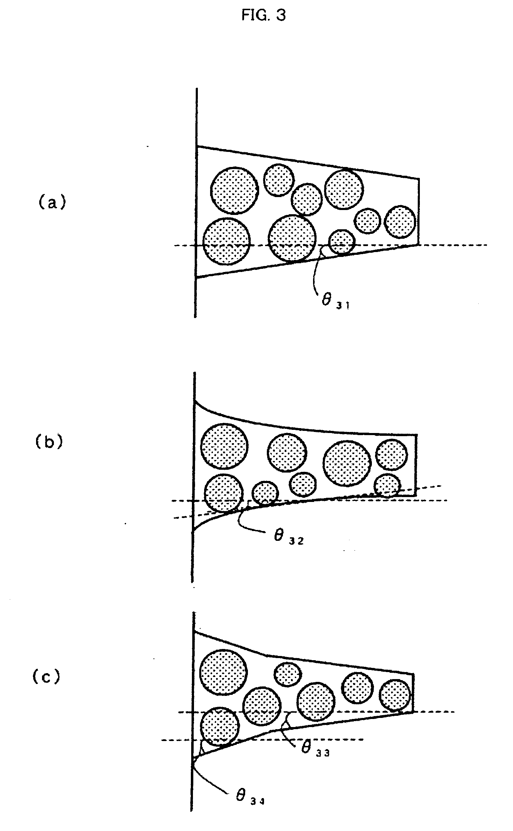

FIG. 3 is a diagram showing various aspects of the shape of the slant face portion of the wedge part. The wedge part has a substantially isosceles trapezoidal shape formed between the adjacent two unit lenses. FIG. 3A shows the case with the slant face formed as a straight line. In this case, the angle θ₃₁ formed by the slant face and the light output surface normal is constant at any point on the slant face. FIG. 3B shows the case with the slant face formed as a smooth curve. Moreover, FIG. 3C shows the case with the slant face formed as two straight lines. In these cases, the angle θ₃₂, θ₃₃ or θ₃₄ differ depending on the position on the slant face. In the present invention, in the case the angle formed by the slant face and the light output surface normal is not constant as in the case of FIG. 3B or FIG. 3C, the effect of the present invention can be obtained if the conditions heretofore explained can be satisfied in 90% or more in the length of the slant face.

### (Third embodiment)

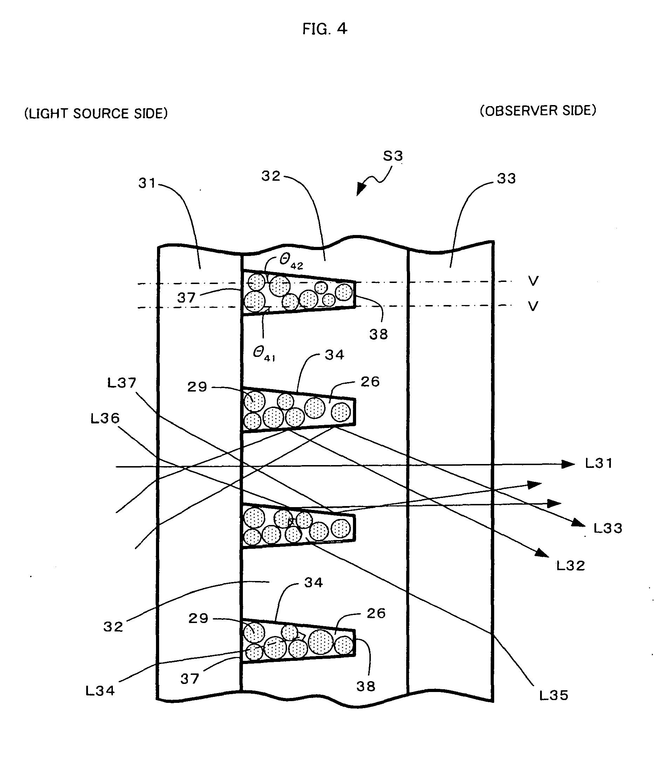

FIG. 4 shows a cross section of a view angle controlling sheet S3 of a third embodiment of the present invention. In the view angle controlling sheet shown in FIG. 4, those having the same configuration as that of the constituent elements of the view angle controlling sheet shown in FIG. 2 have the same numerals as those used in FIG. 2 applied and the explanation thereof is optionally omitted. The view angle controlling sheet S3 comprises a light beam side base sheet 31, a lens part 32, and an observer side base sheet 33 attached from the light source side to the observer side successively. The lens part 32 is made of a substance having a high refractive index N1. Furthermore, the cross section trapezoidal portions unsymmetrical in the right and left direction 34, 34, .... (hereinafter, it may be described as the "wedge parts 34, 34, ...") provided between the cross section trapezoidal lens parts 32,32 adjacent in the vertical direction in the figure are filled with a material with a light absorbing particle 29 added in a transparent substance as the main material having a refractive index of N2, which is lower than N1 (hereinafter it will be referred to as the "Transparent low refractive index substance 26"). The wedge parts 34 have a lower bottom surface 37 having a wider width to the light source side and an upper bottom surface 38 having a narrower width to the observer side.

In the present invention, the base sheets 31, 33 to be attached to the view angle controlling sheet S3 may be provided on either of the light source side and the observer side, or only the view angle controlling sheet S3 may be provided without using a base sheet. As to the method for forming the lens part, the conventionally known methods such as the thermal press method of pressing a heated die to a thermoplastic resin, the casting method of injecting a thermoplastic resin composition into a mold and solidifying the same, an injection molding method, and a UV method of injecting a ultraviolet ray hardening type resin composition into a shaping mold and hardening the same with a ultraviolet ray, can be used. Among these methods, the UV method with the excellent mass productivity is more preferable. According to the UV method, using a roll like mold, an arranged lens unit can be produced continuously. For example, the lens part 32 in general is made of an ionizing radiation hardening material such as an epoxy acrylate. In the case of carrying out a method for producing a lens part using an ionizing radiation hardening material, a method of forming a lens part on a base sheet 33 is used.

The refractive index N1 of the lens part 32 and the refractive index N2 of the low refractive index substance 26 for filling the wedge part 34 are set in a predetermined range N2 < N1 for obtaining the optical characteristics of the view angle controlling sheet S3. Moreover, the angles formed by the slant face with the wedge part 34 and the lens part 32 contacted and the normal V of the light output plane (the line parallel to the perpendicular incident light beam to the view angle controlling sheet S3) θ₄₁, θ₄₂ are formed unsymmetrical in the right and left direction such that θ₄₁ < θ₄₂, 3° ≤ θ₄₁ ≤ 15°, 3° ≤ θ₄₂ ≤ 15°.

After filling the wedge part 34 by a wiping method, or the like, the ink including at least the transparent low refractive index substance 26 and the light absorbing particle 29 is hardened by the ionizing radiation such as the ultraviolet ray so as to be fixed to the wedge part. Moreover, the light source side base sheet 31 and the observer side base sheet 33 are made of a material having the substantially same refractive index as that of the lens part 32.

In this embodiment, as in the case of the view angle controlling sheets S1, S2 in the first or second embodiment, at least one additive function of AR, AS and AG may be provided to at least on one surface side of the view angle controlling sheet S3 so as to provide the function property to the view angle controlling sheet S3.

Next, the optical path of a light beam inputted into the lens part 32 of the view angle controlling sheet S3 will be explained briefly optionally with reference to FIG. 4 and FIG. 2. In FIG. 4, the optical paths of the light beams L31 to L37 are shown schematically. Moreover, the angles of the light beams L31 to L35 incident on the lens part 32 in FIG. 4 and the angles of the light beams L21 to L25 incident on the lens part 22 in FIG. 2 are assumed to be same. A perpendicular light beam L31 incident in the vicinity of the central part of the lens part 32 from the light source side passes straightly in the inside of the view angle controlling sheet S3 as it is so as to reach to the observer. A light beam L32 incident obliquely in the vicinity of the end part of the lens part 32 from the light source side with a predetermined angle is totally reflected by the slant face forming a θ₄₁ angle with the normal V of the light output surface according to the refractive index difference between the lens part 32 having the refractive index N1 and the wedge part 34 having the refractive index N2 so as to be outputted to the observer side by an angle shifted downward compared with L22. A light beam L33 incident on the lens part 32 with a large angle from the light source side is totally reflected by the slant face forming a θ₄₁ angle with the normal V of the light output surface so as to be outputted to the observer side by an angle shifted downward compared with L23. On the other hand, an incident light beam L36 incident in the vicinity of the end part of the lens part 32 with a predetermined angle from the light source side is totally reflected by the slant face forming a θ₄₂ (> θ₄₁) angle with the normal V of the light output surface according to the refractive index difference between the lens part 32 having the refractive index N1 and the wedge part 34 having the refractive index N2 so as to be outputted to the observer side as a perpendicular light beam. A light beam L37 incident on the lens part 32 with a large angle from the light source side is totally reflected by the slant face forming a θ₄₂ (> θ₄₁) angle with the normal V of the light output surface so as to be outputted to the observer side with a small angle in the direction opposite to the direction at the time of input as a light beam having an angle close to a perpendicular light beam. On the other hand, a light beam L34 incident directly from the bottom surface 37 to the wedge part 34 is inputted to the inside of the wedge part 34. Since the wedge part 34 is colored, the light beam L34 is absorbed by the wedge part 34 without reaching to the observer side. Furthermore, a light beam L35 incident on the slant face with an angle smaller than a predetermined value from the observer side and directing to the light source side is not totally reflected by the refractive index difference between the lens part 32 and the wedge part 34 so as to be inputted to the inside of the wedge part 34 and the beam L35 is absorbed by the colored wedge part 34. According to the third embodiment, a view angle controlling sheet capable of controlling the view angle in the cross sectional direction, in particular, capable of shifting the view angle downward as well as capable of restraining the luminance deterioration can be obtained.

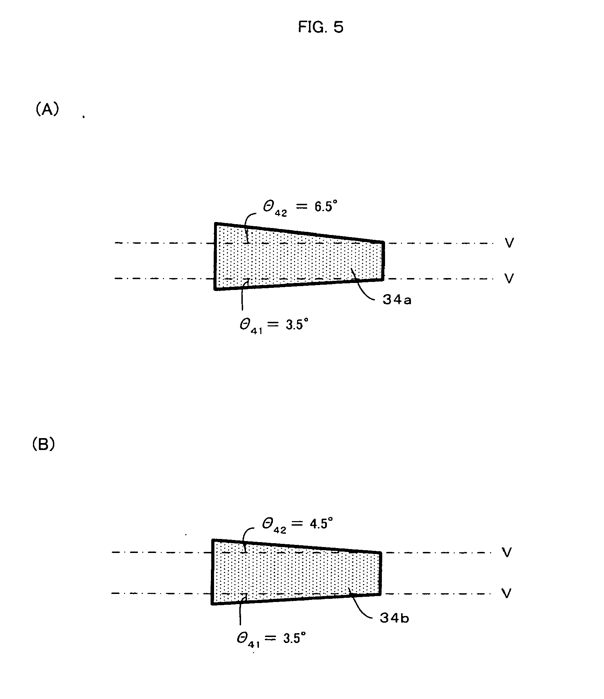

FIG. 5 is a diagram showing aspect examples of the angles θ₄₁, θ₄₂ formed by the slant face of the wedge part and the normal of the light output surface according to the third embodiment. In order to facilitate understanding of the aspects of θ₄₁ and θ₄₂, in FIG. 5, only the wedge part according to the third embodiment is extracted and enlarged. FIG. 5A shows the embodiment of the wedge part 34a with θ₄₁ = 3.5°, θ₄₂ = 6.5°, and FIG. 5B shows the embodiment of the wedge part 34b with θ₄₁ = 3.5°, θ₄₂ = 4.5°, respectively. According to the third embodiment, as long as θ₄₁ and θ₄₂ satisfy the condition that θ₄₁ < θ₄₂, 3° ≤ θ₄₁ ≤ 15°, and 3° ≤ θ₄₂ ≤ 15°, the other conditions are not particularly limited. However, in terms of effectively shifting downward the view angle, it is further preferable that θ₄₂ - θ₄₁ ≥ 2°. That is, according to the wedge part 34a shown in FIG. 5A, θ₄₂ - θ₄₁ = 3°. On the other hand, according to the wedge part 34b shown in FIG. 5B, θ₄₂ - θ₄₁ = 1°. Therefore, in terms of effectively shifting downward the view angle, the wedge part 34a of FIG. 5A is preferable.

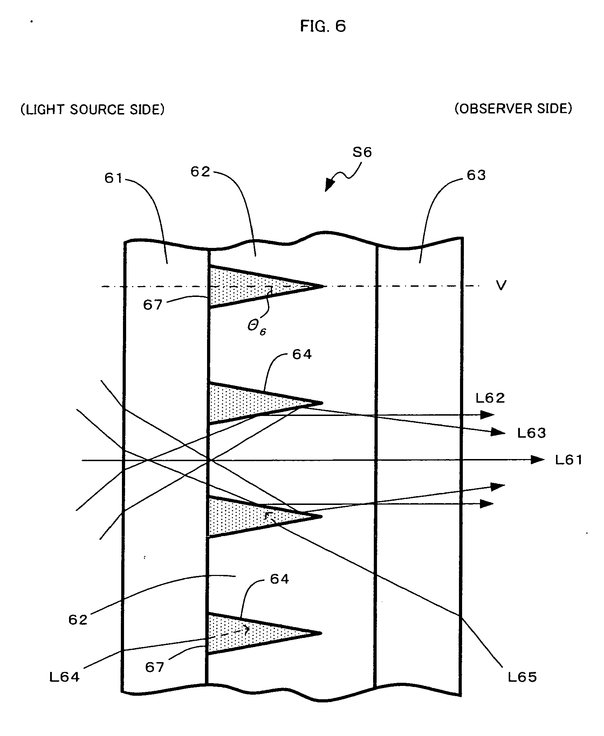

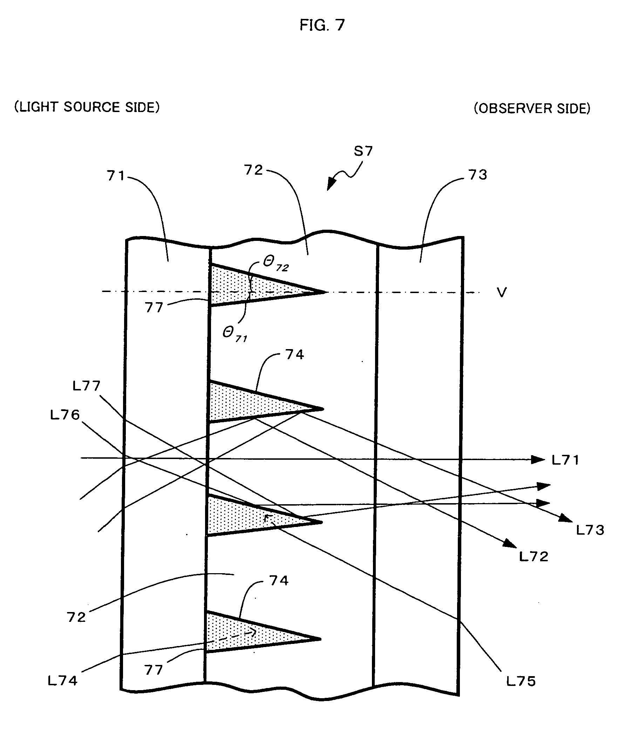

The embodiments with the wedge part cross sectional shape of a substantial isosceles trapezoid or a trapezoid unsymmetrical in the right and left direction have been described so far, however, the cross sectional shape of the wedge part according to the present invention is not limited to these shapes. Even in the case the cross sectional shape is substantially isosceles triangular (see FIG. 6), or acute triangular unsymmetrical in the right and left direction (see FIG. 7 ) , a view angle controlling sheet capable of achieving the same effect as in the case of the substantially isosceles trapezoid or the trapezoid unsymmetrical in the right and left direction can be provided.

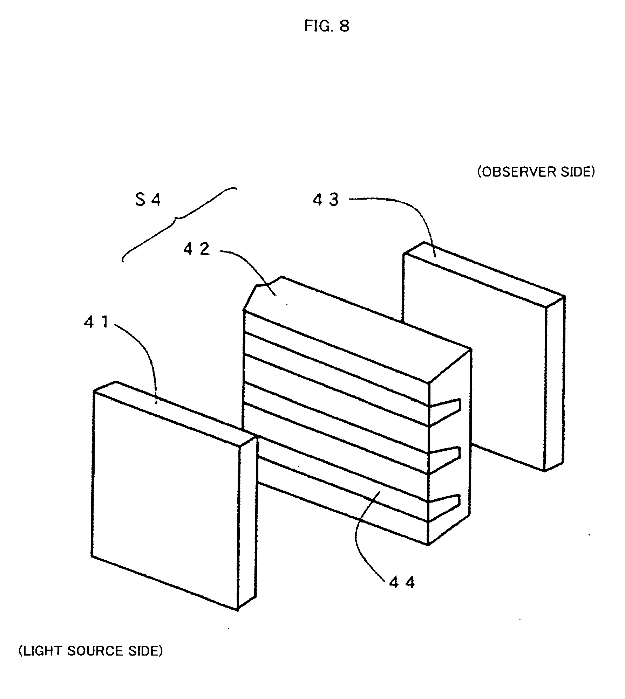

FIG. 8 is a diagram showing an example of the configuration of a view angle controlling sheet according to the present invention. The view angle controlling sheet S4 shown in FIG. 8 comprises a unit lens part 42 with the cross sectional shape constant in the horizontal direction (it is referred to as the lateral stripe) , and a wedge part 44 filled with a light absorbing material is provided between the adjacent lens parts. A base sheet 41 is disposed on the light source side and a base sheet 43 on the observer side. Although the three elements are described separately in the figure for facilitating understanding, they are attached in reality. The base sheets may be provided either of the light source side and the observer side, or only the view angle controlling sheet S4 may be provided. In the case the lateral stripe view angle controlling sheet is assembled in a vehicle mounting type liquid crystal display apparatus, the reflection can be prevented by controlling the light beam in the vertical direction on the observer side so as not to output the light beam upward.

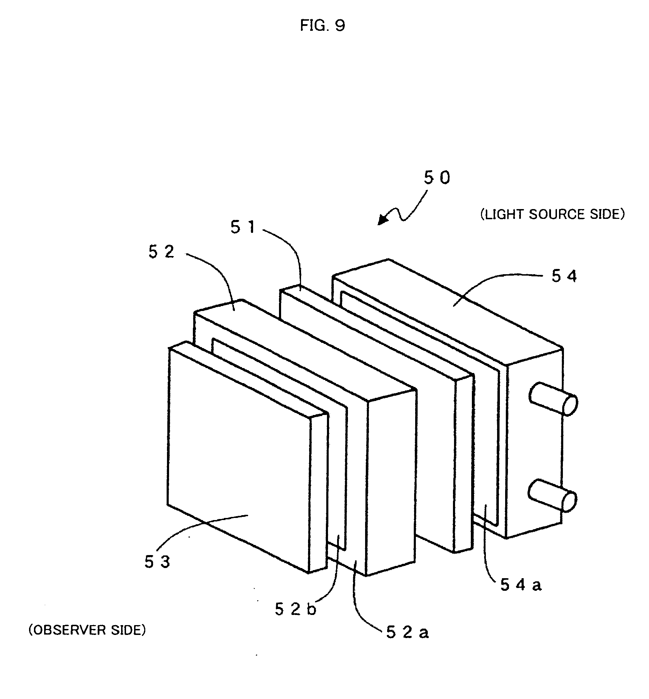

FIG. 9 shows the configuration of a liquid crystal display apparatus 50 comprising a view angle controlling sheet 51 according to the present invention. As a configuration example, a transmission type liquid crystal display apparatus is shown. The liquid crystal display apparatus 50 comprises a surface light source 54 and a transmission type liquid crystal panel 52, with the view angle controlling sheet 51 provided therebetween. To the surface 52a of the liquid crystal panel 52, a surface protection plate 53 is superimposed on the rear surface thereof.

The surface protection plate 53 faces to the display area 52b of the surface 52a of the liquid crystal panel 52. The surface protection plate 53 may be provided with a function by applying a surface treatment of hard coating, non glare, non reflection coating, or the like to the surface of a transparent film of an acrylic resin, a polycarbonate, or the like.

The view angle controlling sheet 51 of the present invention can also be used for a semi transmission type/semi reflection type liquid crystal display apparatus.

The surface light source 54 disposed on the rear surface side of the liquid crystal panel 52 plays the role of a back light for the liquid crystal panel 52. The light source 54 outputs a surface like light beam from the light emitting surface 54a toward the rear surface of the liquid crystal panel 52 via the view angle controlling sheet 51. As to the light source 54, either of the immediately below type system or the edge light type system can be used. Those of any system such as those having a surface like light beam from a cold cathode fluorescent pipe or a light emitting diode with a light diffusion plate, or the like, or an electroluminescence, or the like can be used as long as it is a surface light source for directing a light beam to the entire surface of the liquid crystal panel. The view angle controlling sheet 51 is superimposed thereon between the light source 54 and the liquid crystal panel 52 such that the view angle controlling sheet 51 receives a light beam from the light source 54 so as to input the same to the rear surface of the liquid crystal panel 52 while controlling the transmission angle of the light beam. Thereby, an image can be displayed on the liquid crystal panel 52.

A display apparatus of such a configuration is used mainly for the application of preventing the reflection of the display image to a front glass as in the case of a display apparatus for a vehicle. As the display apparatus in the embodiment, various kinds such as a liquid crystal television, a liquid crystal monitor for a navigator, a display apparatus for an air conditioner, and a meter can be presented.

Moreover, it can be used also for the application of preventing peeping for the display apparatus such as a portable telephone and an ATM. At the time, in order to thoroughly preventing peeping, it is also possible that only the observer in the front can view by using a view angle controlling sheet with the lens parts arranged in the perpendicular direction and a view angle controlling sheet with the lens parts arranged in the horizontal direction in a state with the two sheets laminated.

### [Examples]

### (Example 1)

A view angle controlling sheet provided with a wedge part having an isosceles trapezoidal cross section as shown in FIG. 2 wasproducedby the following specification. The aperture ratio denotes the area ratio of the lens part excluding the wedge part lower bottom area of the view angle controlling sheet, and the trapezoid taper angle is the angle formed by the slant race portion of the trapezoidal wedge part with the normal of the light output surface on the observer side (θ). The view angle controlling sheet was evaluated according to the front side transmittance of the view angle controlling sheet and the view angle.

The front side transmittance of the view angle controlling sheet was measured using a minute deviation angle luminance meter GP-500 produced by Nakamura Color Technology Research Institute, with a reference piece capable of obtaining a substantially even diffused light beam at the angle -80° to +80° for reference with the transmittance of only the reference piece provided as 100%. Next, with the view angle controlling sheet to be measured superimposed on the reference peace, the transmittance in the front direction was measured so as to find out the relative value with respect to the reference piece. As to the view angle, using the minute deviation angle luminance meter GP-500, the angle dependency of the transmittance was measured in a state with the view angle controlling sheet superimposed on the reference. The angle range to have the transmittance of 10% or more with the reference piece provided as 100% was defined to be the view angle.
Aperture ratio: 60%
Pitch between the lenses: 0.083 mm
Lens part material (resin) refractive index: 1.56
Wedge part main material refractive index: 1.545
Wedge part upper bottom surface width: 10 µm
Trapezoid taper angle: 6°
Black light absorbing particle size: 6 µm
Black light absorbing particle concentration (with respect to the wedge part total volume): 20% by volume

### (Example 2)

A view angle controlling sheet provided with a wedge part having an isosceles trapezoidal cross section as shown in FIG. 2 was produced by the following specification. The aperture ratio denotes the area ratio of the lens part excluding the wedge part lower bottom area of the view angle controlling sheet, and the trapezoid taper angle is the angle formed by the slant race portion of the trapezoidal wedge part with the normal of the light output surface on the observer side (θ).
Aperture ratio: 40%
Pitch between the lenses: 0.065 mm
Lens part material (resin) refractive index: 1.56
Wedge part main material refractive index: 1.48
Wedge part upper bottom surface width: 8 µm
Trapezoid taper angle: 10°
Black light absorbing particle size: 6 µm
Black light absorbing particle concentration (with respect to the wedge part total volume): 20% by volume

### (Comparative example 1)

A view angle controlling sheet was produced in the same conditions as in the example 1 except that the wedge part main material (resin) refractive index was changed to 1.56.

### (Comparative example 2)

A view angle controlling sheet was produced in the same conditions as in the example 2 except that the wedge part main material (resin) refractive index was changed to 1.56.

The view angle controlling sheets produced by the examples 1, 2 and the comparative examples 1, 2 were installed successively to the front surface of the light source so as to compare the light beam transmittance and the view angle. The results are shown in the table 1.

**[Table 1]**

| | EXAMPLE 1 | EXAMPLE 2 | COMPARATIVE EXAMPLE 1 | COMPARATIVE EXAMPLE 2 |
|---|---|---|---|---|
| LIGHT TRANSMITTING PART REFRACTIVE INDEX | 1. 56 | 1. 56 | 1. 56 | 1. 56 |
| WEDGE PART MAIN MATERIAL REFRACTIVE INDEX | 1. 545 | 1. 48 | 1. 56 | 1. 56 |
| APERTURE RATIO | 60% | 40% | 60% | 40% |
| TRANSMITTANCE | 76% | 83% | 63% | 43% |
| VIEW ANGLE | 120° | 90° | 160° | 90° |

As it is shown in the table 1, according to the view angle controlling sheets shown in the examples 1 and 2, a light beam incident on the effective portion was totally reflected and converged so as to effectively utilize the diffused light beam from the light source for obtaining the transmittance of more than the aperture ratio, and furthermore, a preferable view angle controlling characteristic was shown while maintaining a certain view angle. On the other hand, according to the view angle controlling sheet of the comparative example 1, the transmittance was lowered compared with the example 1, and the view angle control was insufficient. Moreover, according to the view angle controlling sheet of the comparative example 2, the transmittance was drastically insufficient and thus it was inappropriate. From the results mentioned above, it was confirmed that the view angle controlling sheets of the present invention are a view angle controlling sheet having high light utilization efficiency and the excellent view angle control, to be produced inexpensively.

### (Example 3)

A view angle controlling sheet provided with a wedge part having an isosceles trapezoidal cross section as shown in FIG. 2 was produced by the following specification. The aperture ratio denotes the area ratio of the lens part excluding the wedge part lower bottom area of the view angle controlling sheet, and the trapezoid taper angle is the angle formed by the slant race portion of the trapezoidal wedge part with the normal of the light output surface on the observer side (θ). The view angle controlling sheet was evaluated according to the front side transmittance and the light output angel of the view angle controlling sheet and the luminance.

The front side transmittance of the view angle controlling sheet was measured using a minute deviation angle luminance meter GP-500 produced by Nakamura Color Technology Research Institute, with a reference piece capable of obtaining a substantially even diffused light beam at the angle -80° to +80° for reference with the transmittance of only the reference piece provided as 100%. Next, with the view angle controlling sheet to be measured superimposed on the reference peace, the transmittance in each light output angel was measured so as to find out the relative value with respect to the reference piece.

As to the luminance measurement, using a 5,000 cd/m² back light having an even diffusion characteristic as the light source, it was measured from the back light front side with the view angel controlling sheet placed on the back light by a luminance meter LS-110 produced by Konica Minolta Holding Corp.
Aperture ratio: 50%
Pitch between the lenses: 0.060 mm
Lens part material (resin) refractive index: 1.56
Wedge part main material refractive index: 1.48
Wedge part upper bottom surface width: 6.4 µm
Wedge part lower bottom surface width: 30 µm
Trapezoid taper angle: 4.5°
Black light absorbing particle size: 6 µm
Black light absorbing particle concentration (with respect to the wedge part total volume): 20% by volume

### (Example 4)

A view angle controlling sheet provided with a wedge part having a trapezoidal cross section unsymmetrical in the right and left direction as shown in FIG. 4 was produced by the following specification. The aperture ratio denotes the area ratio of the lens part excluding the wedge part lower bottom area of the view angle controlling sheet, and the trapezoid taper angle is the angle formed by the slant race portion of the trapezoidal wedge part with the normal of the light output surface on the observer side (θ₄₁, θ₄₂).
Aperture ratio: 55%
Pitch between the lenses: 0.074 mm
Lens part material (resin) refractive index: 1.56
Wedge part main material refractive index: 1.48
Wedge part upper bottom surface width: 6.4 µm
Wedge part lower bottom surface width: 33 µm
Trapezoid taper angle: θ₄₁ = 3.5°, θ₄₂ = 6.5°
Black light absorbing particle size: 6 µm
Black light absorbing particle concentration (with respect to the wedge part total volume): 20% by volume

### (Example 5)

A view angle controlling sheet provided with a wedge part having a trapezoidal cross section unsymmetrical in the right and left direction as shown in FIG. 4 was produced by the following specification. The aperture ratio denotes the area ratio of the lens part excluding the wedge part lower bottom area of the view angle controlling sheet, and the trapezoid taper angle is the angle formed by the slant race portion of the trapezoidal wedge part with the normal of the light output surface on the observer side (θ₄₁, θ₄₂).
Aperture ratio: 54%
Pitch between the lenses: 0.060 mm
Lens part material (resin) refractive index: 1.56
Wedge part main material refractive index: 1.48
Wedge part upper bottom surface width: 6.4 µm
Wedge part lower bottom surface width: 28 µm
Trapezoid taper angle: θ₄₁ = 3.5°, θ₄₂ = 4.5°
Black light absorbing particle size: 6 µm
Black light absorbing particle concentration (with respect to the wedge part total volume): 20% by volume

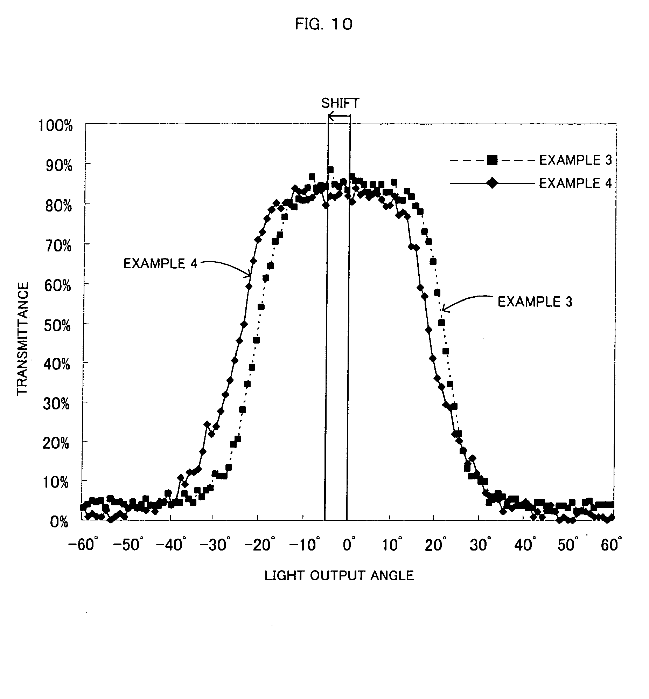

Using the view angle controlling sheets produced by the specifications of the examples 3, 4, the relationship between the transmittance and the light output angle of the view angle controlling sheet was examined. The results are shown in FIG. 10. In FIG. 10, the vertical axis denotes the transmittance (%) and the lateral axis the light output angle (°), respectively.

As shown in FIG. 10, according to the view angle controlling sheet of the example 3 comprising a wedge part having an isosceles trapezoidal cross sectional shape, the transmittance becomes maximum (peak) in the vicinity of the light output angle 0°. On the other hand, with the light output angle of a 30° or more absolute value (+30° or more or -30° or less), the transmittance becomes less than 10% so that the light beam can barely be detected. On the other hand, according to the view angle controlling sheet of the example 4, the peak position was shifted to the minus side by about 5°.

The luminance of the view angle controlling sheets of the examples 3, 4, 5 was compared in the case of the light output angle of 0°, -5°, 30°. The results are shown in the table 2.

**[Table 2] LUMINANCE COMPARISON (cd/cm²)**

| | 0° | -5° | 30° |
|---|---|---|---|
| EXAMPLE 3 | 576 | 528 | 38 |
| EXAMPLE 4 | 510 | 535 | 33 |
| EXAMPLE 5 | 456 | 470 | 29 |

As shown in the table 2, the view angle controlling sheet according to the example 3 comprising the wedge part having an isosceles trapezoidal cross sectional shape has a luminance at the light output angle 0° larger than the luminance at the light output angles -5°, 30°. On the other hand, the view angle controlling sheets according to the examples 4, 5 comprising the wedge part having a trapezoidal cross section unsymmetrical in the right and left direction have a luminance at the light output angle -5° larger than the luminance at the light output angles 0°, 30°. That is, from the results of the table 2, it was confirmed that the peak position can be shifted by providing the cross sectional shape of the wedge part unsymmetrical in the right and left direction. As in the case of the view angle controlling sheet according to the example 3, the luminance at the light output angle 30° was extremely small also in the view angle controlling sheets according to the examples 4, 5. That is, from the results, it was confirmed that a view angle controlling sheet with the excellent view angle control can be produced with a wedge part cross sectional shape provided as a trapezoid unsymmetrical in the right and left direction.

Although the present invention has been explained relating to the embodiments which seemed to bemost practical and preferable at this point, the present invention is not limited to the embodiments disclosed in this specification, and it can be modified optionally within a scope not parting from the gist and the idea of the invention to be read out from the claims and the entire specification so that a view angle controlling sheet accompanied with such a modification and a liquid crystal display apparatus using the same should be understood as those included in the technological range of the present invention.

## Claims

1. A view angle controlling sheet (S1) to be disposed between the light source (54) and the liquid crystal panel (52) of a liquid crystal display apparatus (50), wherein the view angle controlling sheet (S1) has lens parts (12) having a trapezoidal cross sectional shape arranged at predetermined intervals and wedge parts (14) between the adjacent lens parts (12) are filled with a light absorbing material such that each wedge part (14) has a top end (18) disposed to the observer side and a bottom surface (17) disposed to the light source side, with the proviso that where the angle formed by the slant face portion of the wedge part (14) and the normal (V) of the light output plane is θ, θ is in a range of 3° ≤ θ ≤ 15°.

2. The view angle controlling sheet (S1, S6) according to claim 1, wherein the cross sectional shape of the wedge part (14, 64) is substantially isosceles trapezoidal (14) or substantially isosceles triangular (64) with the wider bottom surface (17, 67) disposed to the light source side.

3. The view angle controlling sheet (S3, S7) according to claim 1, wherein the cross sectional shape of the wedge part (34, 74) is trapezoidal unsymmetrical in the right and left direction (34) or acute triangular unsymmetrical in the right and left direction (74) with the wider bottom surface (37, 77) disposed to the light source side.

4. The view angle controlling sheet (S1) according to any one of claims 1 to 3, wherein, where the refractive index of the main material comprising the wedge part (14) is N2 and the refractive index of the material comprising the lens part (12) is N1, the relationship of N2 < N1 is satisfied.

5. The view angle controlling sheet (S1) according to any one of claims 1 to 4, wherein the slant face portion of the wedge part (14) has a curved and/or bent cross sectional shape such that the angle formed with the observer side surface differs between the light source side and the observer side.

6. The view angle controlling sheet (S2) according to any one of claims 1 to 5, wherein the light absorbing material to fill the wedge part (24) is black particles (29).

7. The view angle controlling sheet (S2) according to claim 6,wherein, where the bottom surface (27) width of the wedge part (24) is L µm and the average particle size of the black particles (29) is φ µm, the relationship of 1 µm ≤ φ ≤ (L/2) µm is satisfied.

8. The view angle controlling sheet (S1) according to any one of claims 1 to 7, wherein at least one additional function of antireflection (AR), antistatic (AS) and antiglare (AG) is provided to at least on one surface side.

9. A liquid crystal display apparatus (50) comprising the view angle controlling sheet (51) according to any one of claims 1 to 8, a light source (54) disposed on one side of the view angle controlling sheet (51), and a liquid crystal panel (52) disposed on the other side of the view angle controlling sheet (51).

10. The liquid crystal display apparatus (50) according to claim 9, wherein the view angle controlling sheet (51) is bonded to the side of the liquid crystal panel.
